# EUROPEAN PATENT APPLICATION

(11) **EP 2 618 451 A2**
(43) Date of publication of application: **24.07.2013**
(21) Application number: 13150170.2
(22) Date of filing: 03.01.2013
(51) Int. Cl.: H02J 7/00

(54) **Method of establishing a battery charging network**

(30) Priority: 23.01.2012 US 201213356031
(71) Applicant: Current Ways, Inc., Santee, CA 92071 (US)
(72) Inventor: Kadie, Michael, San Diego, CA California 92126 (US)
(74) Representative: McCarthy, Denis Alexis

(57) **Abstract**

A charger network is established by a process which includes powering up a charger (120) which performs a self check. The charger (120) communicates to the network via a communication means (140), sets itself to master and can provide power to a battery pack (160).

## Description

### TECHNICAL FIELD

The present invention relates generally to a flexible battery charger for charging large battery banks. More particularly, the present invention relates to a stackable battery charger that is enabled to work with batteries that are sensitive to charging conditions therefore they need continual communication and demand large amounts of power for quick charging.

### BACKGROUND

A high voltage battery system, such as battery pack which is a composition of individual cells, is a critical element of several important applications such as electric vehicle drives and mass energy storage system. A "cell" can mean a single electrochemical cell comprised of the most basic units, i.e. a positive plate, a negative plate, and an electrolyte. However, as used herein, the term is not so limited and may include a group of cells that can comprise a single unit as a component of a battery pack and the use of the latest in battery chemistries i.e. lithium and lithium combinations. A battery or battery pack is a series or parallel connection of units or individual cells.

Achieving wide market acceptance for high voltage battery applications requires an economically viable system for charging high voltage battery packs. Addressing this demand requires developing a high power density charging system that can supply a controlled charging current at high output voltages. However, realizing such a system requires overcoming certain practical problems related to the high output voltage.

In principle, a battery charger is a power supply with controllable voltage, current and power limits. What differentiates a battery charger from a conventional power supply is the capability to satisfy the unique requirements of a battery pack. Typically, battery chargers have two tasks to accomplish. The first, and most important, is to restore capacity as quickly as possible and the second is to maintain capacity by compensating for self-discharge and ambient temperature variations. These tasks are normally accomplished by controlling the output voltage, current and power of the charger in a preset manner, namely, using a charging algorithm.

The two most common charging algorithms are constant-voltage charging and constant-current charging. In constant-voltage charging, the voltage across the battery string is held constant, with the state of the battery determining the charge current level. The charging process normally terminates after a certain time limit is reached. Constant-voltage charging is most popular in float mode applications.

By contrast, constant-current charging holds the charging current constant. This method is often used in cyclic applications as it recharges the battery in a relatively short time.

There are many variations of the two basic methods using a succession of constant-current charging and constant-voltage charging to optimize battery charge acceptance. These variations, however, require a controlled charger with both voltage and current regulation capability. Additionally a charger is limited to its designed voltage, current and power limits. The charger is also limited to its input limitations meaning that the charger can only supply to the battery string a subset of power provided to it from a power source like the a standard 120 volt socket with a 20 amp limit.

Therefor it is desirable to have a charger that is enabled to increase its ability to provide more power to meet the charging requirements of the battery string such that the charging of the battery string can happen more quickly without overcharging which can critically damage a battery.

### SUMMARY

While the apparatus and method has or will be described for the sake of grammatical fluidity with functional explanations, it is to be expressly understood that the claims, unless expressly formulated under 35 USC 112, are not to be construed as necessarily limited in any way by the construction of "means" or "steps" limitations, but are to be accorded the full scope of the meaning and equivalents of the definition provided by the claims under the judicial doctrine of equivalents, and in the case where the claims are expressly formulated under 35 USC 112 are to be accorded full statutory equivalents under 35 USC 112.

The present invention specifically addresses and alleviates the above mentioned deficiencies associated with the prior art. According to a preferred aspect of the present invention the method of developing a battery charger network that is able to add available chargers into a charging network to satisfy the charging requirements and in some events increase the speed in which the battery string is fully charged by enabling more voltage and current and power to the battery string via a charger network.

According to one aspect, the present invention comprises a method for charging a battery string via a network of chargers, wherein the network comprises at least one charger, at least one battery string and at least one means of communicating between the chargers. Additional resources like a battery management system can be added to the network to increase functionality.

In one embodiment of the present invention two chargers are enabled to communicate to each other via a communication protocol and the two chargers are independently connected to a power source like a wall outlet that is tied to the electric grid. In this embodiment the chargers are smartly programmed such that the chargers can communicate to each other and additional resources like a battery management system.

Another aspect of the present invention is realized once communication is established in that the charger can be smartly configured such that one battery charger is identified as the master, the second battery charger is identified as a slave.

### BRIEF DESCRIPTION OF THE DRAWINGS

The invention and its various embodiments can now be better understood by turning to the following detailed description of the preferred embodiments which are presented as illustrated examples of the invention defined in the claims. It is expressly understood that the invention as defined by the claims may be broader than the illustrated embodiments described below.

Figure 1 represents the physical connections of a charging system without a charger network.

Figure 2 represents a diagram of a charger network of the present invention.

Figure 3 is a flowchart which represents the logical process in which a charger network is established in practice.

### DETAILED DESCRIPTION OF THE INVENTION

Many alterations and modifications may be made by those having ordinary skill in the art without departing from the spirit and scope of the invention. Therefore, it must be understood that the illustrated embodiment has been set forth only for the purposes of example and that it should not be taken as limiting the invention as defined by the following claims. For example, notwithstanding the fact that the elements of a claim are set forth below in a certain combination, it must be expressly understood that the invention includes other combinations of fewer, more or different elements, which are disclosed herein even when not initially claimed in such combinations.

The words used in this specification to describe the invention and its various embodiments are to be understood not only in the sense of their commonly defined meanings, but to include by special definition in this specification structure, material or acts beyond the scope of the commonly defined meanings. Thus if an element can be understood in the context of this specification as including more than one meaning, then its use in a claim must be understood as being generic to all possible meanings supported by the specification and by the word itself.

The definitions of the words or elements of the following claims therefore include not only the combination of elements which are literally set forth, but all equivalent structure, material or acts for performing substantially the same function in substantially the same way to obtain substantially the same result. In this sense it is therefore contemplated that an equivalent substitution of two or more elements may be made for any one of the elements in the claims below or that a single element may be substituted for two or more elements in a claim. Although elements may be described above as acting in certain combinations and even initially claimed as such, it is to be expressly understood that one or more elements from a claimed combination can in some cases be excised from the combination and that the claimed combination may be directed to a subcombination or variation of a subcombination.

Insubstantial changes from the claimed subject matter as viewed by a person with ordinary skill in the art, now known or later devised, are expressly contemplated as being equivalently within the scope of the claims. Therefore, obvious substitutions now or later known to one with ordinary skill in the art are defined to be within the scope of the defined elements.

Thus, the detailed description set forth below in connection with the appended drawings is intended as a description of the presently preferred embodiment of the invention and is not intended to represent the only form in which the present invention may be constructed or utilized. The description sets forth the functions and the sequence of steps for constructing and operating the invention in connection with the illustrated embodiment. It is to be understood, however, that the same or equivalent functions may be accomplished by different embodiments that are also intended to be encompassed within the spirit of the invention.

The claims are thus to be understood to include what is specifically illustrated and described above, what is conceptually equivalent, what can be obviously substituted and also what essentially incorporates the essential idea of the invention.

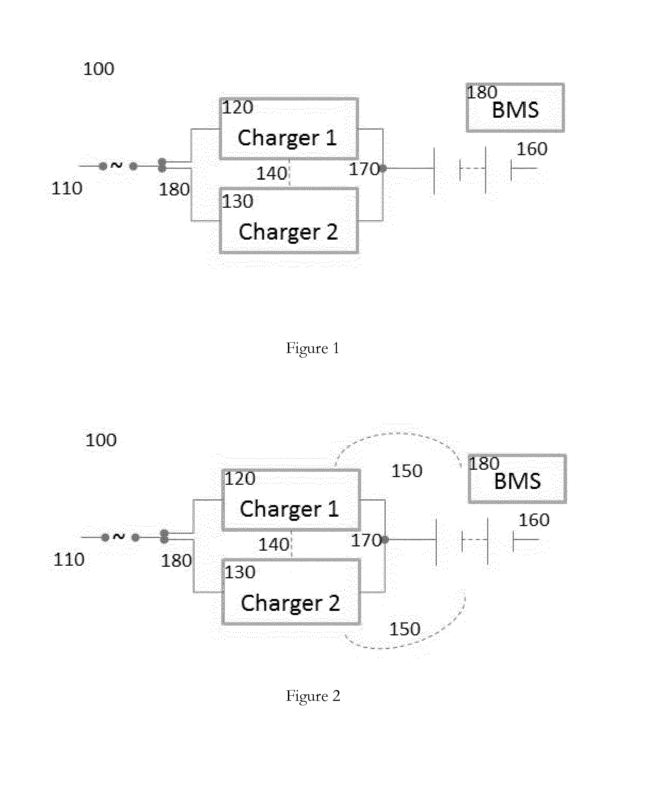

The present invention is illustrated in Figures 1 and 2, which depict a presently preferred embodiment thereof. The Figures represent the invention and assumes the physical connections have been made to establish the physical network of at least one charger, at least one battery pack and at least one source of power and all are recognized and available.

The Figure 1 represents a charging system where the chargers are physically connected such they can charge but lack a communication means which is required in a charger network.

The diagram in Figure 2 represents a charger network of the present invention where the charger network is established by implementing a communication means. More specifically the charger network includes charger 1 (120) and charger 2 (130) wherein charger 1 and charger 2 are smartly configured with a microprocessor and software that can communicate via a communication means (140). Additionally, the charger 1 (120) and charger 2(130) are physically connected to a power source (110) by means of physical connections (180)such that charger 1 (120) and charger 2 (130) are able to receive power from the power source. It is represented in this figure that charger 1 (120) and charger 2 (130) are connected to the same power source (110) but in practice charger 1 (120) and charger 2 (130) would be connected to the power source (110) separately such that they can draw as much power from the power source as possible and are not limited to the restraints of one connection or connection type. The charger 1 (120) and charger 2(130) are also logically connected to a power source by way of a communication means (190) such that if the charger network is connected to a power source that is the smart grid it is able to communicate since the smart gird is configured such that it can communicate with the other electronic devices like a charger network (100) via the communication means (190).

Charger 1 (120) and charger 2 (130) are also physically connected to the battery pack (160) by a physical connection (170) and (175) such that charger 1 and charger 2 can supply power to the battery pack (160). There is a communication means (150) that may additionally be connected to the battery pack (160) by way of a battery management system often referred to as a (BMS) (180). A battery management system is designed to monitor the charging of the battery pack and each cell in the battery pack. This is especially important while charging the battery pack because the charger is not configured to be aware of the condition of each cell in the battery pack and there for an individual cell can be damaged if that one cell has less capacity that the other cells in the battery pack and therefore can be susceptible to overcharging while charging the entire pack. This communication means allows the charger 1 (120) and charger 2 (130) the ability to communicate with the BMS (180). The BMS often acts as an identification means of the battery pack. For example the BMS will have the battery type, battery capacity, battery voltage, battery current, and the overall health of the battery pack and may even have this information for each cell in the battery pack.

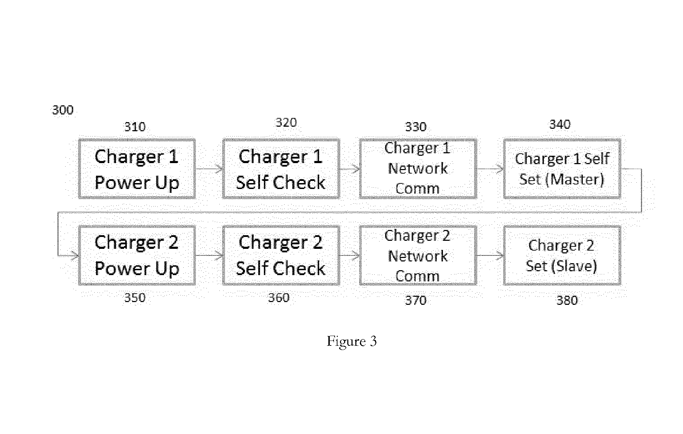

Figure 3 represents the logical process in which a charger network is established by means of charger 1 and charger 2 and a BMS and a power source in which charger 1 and charger 2 and a BMS and a power source all includes a microprocessor for communicating and processing data. Each may also include memory means and a computer. The logical process identified in figure 1 as (300) assumes the physical presence of a charger 1 a charger 2 a BMS and a power source. In the process (300) charger 1 is powered up (310) by means of applying power. Charger 1 then performs a self-check to ensure the charger isn't experiencing a fault that has been predetermined to be detrimental to the charging of a battery pack. Charger 1 then identifies that it is physically connected to a network and logically attempts to communicate on such network (330). Charger 1 then sets itself as master (340) in the charger network. Charger 2 is then powered up (350) by means of applying power and charger 2 performs a self-check (360) to ensure the charger isn't experiencing a fault that has been predetermined to be detrimental to the charging of a battery pack. Charger 2 then identifies that it is physically connected to a network and logically attempts to communicate on such network (370). This communication results in communicating with Charger 1 which is already identified as master so charger 2 is set as slave. Such setting can be performed by the master.

Once the charger network is established charger 1 and charger 2 is then enabled to provide power to the battery pack such that the battery pack can have the benefit of being charged by two chargers charger 1 and charger 2 via a charger network.

## Claims

1. A method of establishing a charger network by means of a process which includes:
powering up a charger;
the charger performing a self-check;
the charger communicating to a network via a communication means;
the charger setting itself to master;
wherein the charger can provide power to a battery pack.

2. A method of establishing a charger network by means of a process which includes:
powering up a charger;
the charger performing a self-check;
the charger communicating to a network via a communication means;
the charger setting itself to master;
powering up an additional charger;
the additional charger performing a self-check;
the additional charger communicating to the charger on a network via a communication means;
the charger setting the additional charger as slave;
wherein the charger and the additional charger can provide power to a battery pack.

3. A method of establishing a charger network by means of a process which includes:
powering up a charger;
the charger performing a self-check;
the charger communicating to a network via a communication means;
the charger setting itself to master;
powering up an additional charger;
the additional charger performing a self-check;
the additional charger communicating to the charger on a network via a communication means;
the charger setting the additional charger as slave;
the charger communicating with a battery management system;
wherein the charger and the additional charger can provide power to a battery pack.
